(19) Europäisches Patentamt
European Patent Office
Office européen des brevets

(11) **EP 2 273 497 B1**

(12) **EUROPEAN PATENT SPECIFICATION**

(45) Date of publication and mention
of the grant of the patent:
**04.04.2012 Bulletin 2012/14**

(51) Int Cl.:
**G11B 7/007** *(2006.01)*   **G11B 7/125** *(2012.01)*
**G11B 7/24** *(2006.01)*

(21) Application number: **09012295.3**

(22) Date of filing: **28.09.2009**

(54) **Multilayered optical disc and its recording method**

Mehrschichtige optische Platte und Aufzeichnungsverfahren dafür

Disque optique multicouches et son procédé d'enregistrement

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.06.2009 JP 2009149295**

(43) Date of publication of application:
**12.01.2011 Bulletin 2011/02**

(73) Proprietor: **Hitachi Consumer Electronics Co., Ltd.**
**Tokyo (JP)**

(72) Inventors:
• **Miyamoto, Harukazu**
**Chiyoda-ku**
**Tokyo 100-8220 (JP)**
• **Kurokawa, Takahiro**
**Chiyoda-ku**
**Tokyo 100-8220 (JP)**

(74) Representative: **Strehl Schübel-Hopf & Partner**
**Maximilianstrasse 54**
**80538 München (DE)**

(56) References cited:
EP-A- 1 788 561    WO-A-2004/086393
JP-A- 2003 109 217    JP-A- 2008 192 258

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

BACKGROUND OF THE INVENTION

The present invention relates to a multilayered optical disc having a plurality of recording layers, and a recording method for the multilayered optical disc having the plurality of recording layers.

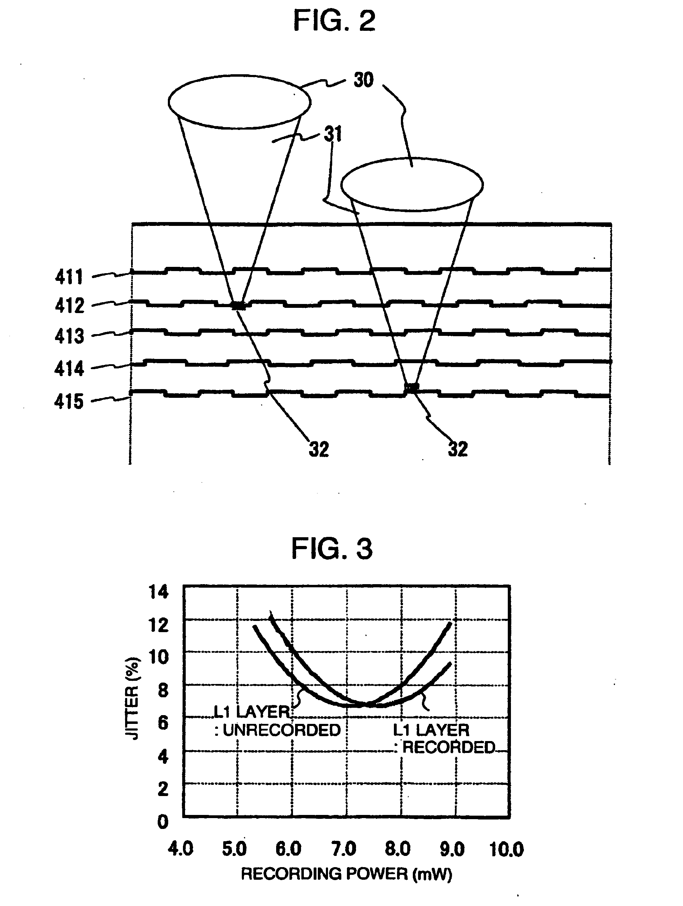

Fig. 2 is a diagram for schematically illustrating the cross-sectional structure of a conventional multilayered optical disc, and the principle based on which information about each recording layer is recorded/reproduced in a selective manner. In the present conventional embodiment, the recording medium includes five recording layers in total (i.e., first recording layer 411, second recording layer 412, third recording layer 413, fourth recording layer 414, and fifth recording layer 415). For example, when trying to access recorded information about the second recording layer 412 with the use of this five-layer recording medium, the position of an objective lens 30 is controlled, thereby positioning the position of an optical spot 32 onto the second recording layer 412. At this time, a converging light beam 31, which is in the course of being focused by the objective lens 30, passes through the semitransparent first recording layer 411. On this first recording layer 411, however, the light-beam diameter of the converging light beam 31 is sufficiently larger as compared with the diameter of the optical spot 32 on the second recording layer 412. This condition makes it impossible to analyze and reproduce recorded information on the semitransparent first recording layer 411 with the use of this converging light beam 31. Also, since the light-beam diameter is sufficiently larger on the semitransparent first recording layer 411, the per-unit-area light intensity becomes relatively smaller thereon. Accordingly, there exists no necessity for worrying about a crash of the information on the first recording layer 411 at the time of the recording thereon. In this way, the recording/reproduction of the information onto/from the second recording layer 412, which is positioned on the farther side than the first recording layer 411, is implemented without suffering from the influence of the first recording layer 411.

Similarly, when recording/reproducing information about the fifth recording layer 415, the position of the objective lens 30 is controlled, thereby positioning the position of the optical spot 32 onto the fifth recording layer 415. Here, the light-beam diameter of the converging light beam 31 on a recording layer which is adjacent to the recording layer targeted for the recording/reproduction becomes equal to $[2d \times (NA/n) / (1 - (NA/n)^2)^{(1/2)}]$, when letting the interlayer spacing be d, numerical aperture of the objective lens be NA, wavelength of the light be $\lambda$, and refractivity of the interlayer transparent layer be n. For example, when d is equal to 8 $\mu$m, and NA is equal to 0. 85, the above-described light-beam diameter becomes equal to about 10 $\mu$m. In comparison with the diameter $\lambda/NA$ = 470 nm of the optical spot 32 on the targeting layer at the time when the wavelength $\lambda$ is equal to 400 nm, this 10-$\mu$m light-beam diameter turns out to be more than 20 times larger in diameter, and more than 400 times wider in area. In JP-A-05-101398, the detailed description has been given concerning the condition under which, as described above, the recording/reproduction is performed onto/from an optical recording medium having a plurality of recording layers without suffering from the influence of another recording layer.

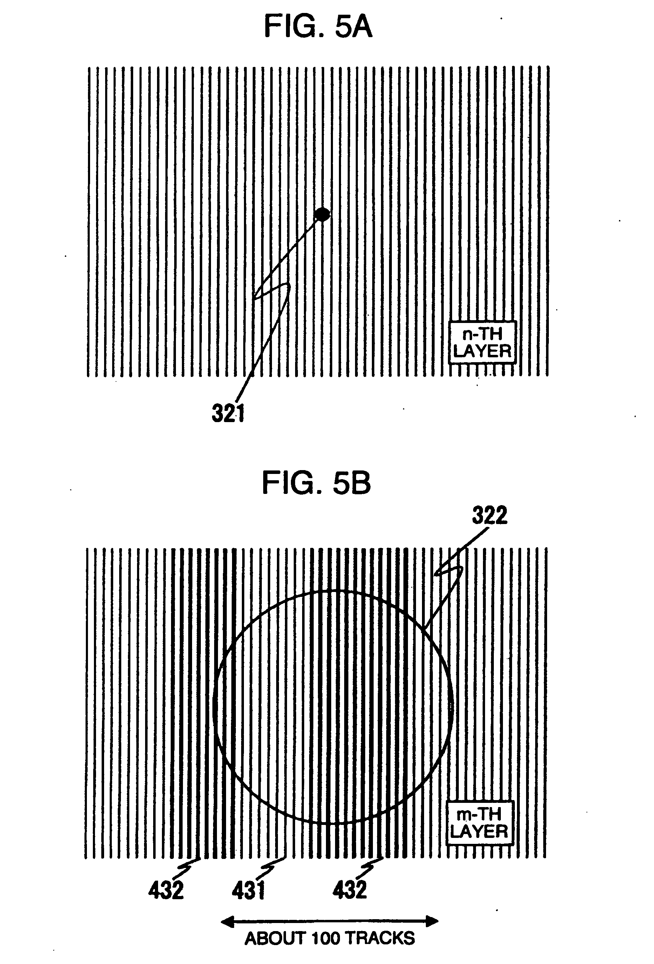

In an optical disc having a plurality of recording layers like this, the following problem exists: When recording information onto a farther-side layer which is positioned on the farther side when seen from a light incident side, a difference occurs in the effective transmittance of a nearer-side layer between a case where the information is recorded onto the farther-side layer via an unrecorded area on the nearer-side layer and a case where the information is recorded onto the farther-side layer via a recorded area on the nearer-side layer. As a result of this difference in the effective transmittance of the nearer-side layer, a difference occurs in the laser power which finds it possible to reach the farther-side layer eventually. Fig. 5A and Fig. 5B illustrate this problem schematically. Fig. 5A illustrates a manner in which the optical spot is focused on an n-th recording layer (i.e., farther-side n-th layer). Fig. 5B illustrates a manner in which, when the optical spot is focused on the farther-side n-th layer, the light beam passes through an m-th recording layer (i.e., nearer-side m-th layer) which is positioned on the nearer side than the farther-side n-th layer. The longitudinal lines in the drawing indicate recording tracks formed on the farther-side n-th layer. The area 431 means a area in which no information is recorded (i.e., unrecorded area); whereas the area 432 means a area in which some information is recorded (i.e., recorded area). In the case of the Blu-ray Disc, the track pitch is equal to 0. 32 $\mu$m, and the light which has entered the nearer-side m-th layer passes through the nearer-side m-th layer in such a manner that the light expands up to a range including about 100 tracks (although this value depends on the distance from the farther-side n-th layer as well). Since the transmittance differs between the recorded area and the unrecorded area, the transmission light-amount comes to differ therebetween even in a case where the same light beam passes therethrough. Namely, it turns out that the effective transmittance of the nearer-side m-th layer varies depending on the ratio between areas of the recorded area and the unrecorded area which exist on the nearer-side m-th layer.

JP 2008 192258 A shows the features according to the preamble of claim 1.

EP 1788 561 A describes to control recording power according to a record/non-record state of corresponding regions of each layer of a two layer medium.

In JP-A-2003-109217, the following disclosure has been made in response to the above-described problem: The recording medium is configured so that the difference in the transmittance between the unrecorded area and the recorded area on the nearer-side m-th layer becomes lower than a constant value. The implementation of this configuration has made it possible to perform the recording onto the farther-side n-th layer using a constant recording power and regardless of the recording state of the nearer-side m-th layer.

As is described in JP-A-2003-109217, it is desirable that, when optical design of the nearer-side m-th layer is performed, the transmittance be prevented from varying between the unrecorded area and the recorded area. Usually, however, an about a-few-% to 10-% extent of transmittance difference is caused to occur between the unrecorded area 431 and the recorded area 432 due to various factors. Here, representatives of these various factors are a medium's manufacturing variation and a medium's design error. Also, even if the transmittances of the nearer-side m-th layer can be made equal to each other, the reflectivities are different therebetween. Accordingly, in some cases, the quality of a reproduced signal from the farther-side n-th layer is caused to vary due to the influence of a reflected light from the nearer-side m-th layer.

Consequently, in an actual medium, some extent of transmittance difference exists between the unrecorded area 431 and the recorded area 432. Namely, as illustrated in Fig. 5A and Fig. 5B, the difference exists in the effective transmittance of the nearer-side m-th layer between the case where the information is recorded onto the farther-side n-th layer via the unrecorded area 431 on the nearer-side m-th layer and the case where the information is recorded onto the farther-side n-th layer via the recorded area 432 on the nearer-side m-th layer. As a result of this difference in the effective transmittance of the nearer-side m-th layer, the difference occurs in the laser power which finds it possible to reach the farther-side n-th layer eventually. More accurately speaking, the effective transmittance of the nearer-side m-th layer at the time when the optical spot 321 is focused on the farther-side n-th layer does not vary in a two-valued manner. Instead, the effective transmittance of the nearer-side m-th layer varies continuously in correspondence with the area ratio between the unrecorded area 431 and the recorded area 432 which occupy the light beam 322 on the nearer-side m-th layer.

The following description indicates an example of influences that this phenomenon exerts onto the recording condition learning. Fig. 3 is a diagram for illustrating the relationship between the recoding power and the jitter (i.e., recorded-signal quality) at the time when the recording/reproduction is performed onto/from a farther-side L0 layer in the case of a two-layer recordable-type optical disc. This relationship is illustrated in a manner of being classified into a case where a nearer-side L1 layer is unrecorded and a case where the nearer-side L1 layer is recorded. The limit equalizer used in the Blu-ray Disc as the standard device is applied for the signal processing method when a reproduced signal is evaluated. The reproduced signal is represented as the largeness/smallness of the signal jitter value. In this measurement, when the entire area of the nearer-side L1 layer is unrecorded, the optimum recording power, i.e., the recording power at which the jitter becomes its minimum, has turned out to be 7. 1 mW. Also, the jitter at this time has turned out to be 6. 7 %. Meanwhile, when the entire area of the L1 layer is recorded, the optimum recording power has turned out to be 7. 5 mW. Namely, the optimum recording power in the case where the L1 layer is recorded shifts to the higher-power side by the amount of about 7 % as compared with the optimum recording power in the case where the L1 layer is unrecorded. If, in the case where the L1 layer is recorded, the recording were to be performed using the 7. 1 mW optimum recording power in the case where the L1 layer is unrecorded, the jitter becomes equal to 7.0 %. Accordingly, it turns out that the jitter increases by the amount of 0.3 % as compared with the case where the optimum recording power is used.

For example, this result means the following phenomenon: Assume that the portion on the L1 layer through which the laser light passes is unrecorded when performing the recording condition learning with respect to the L0 layer, and that the recording is performed onto the entire L0 layer using the optimum recording power determined in this case. At this time, the recording can be performed without any problems when the portion on the L1 layer through which the laser light passes is unrecorded. If, however, the portion is recorded, an increase arises in the jitter of the reproduced signal of data recorded on the L0 layer. Namely, a reduction arises in the effective recording margin. Accordingly, in the method of JP-A-2003-109217, the effective recording margin becomes smaller. This phenomenon has made it difficult to perform the recording over the entire farther-side layer with a high reliability using a constant recording power.

In JP-A-2005-038584 and JP-A-2004-327038, the disclosure has been made concerning conventional embodiments for avoiding the above-described problem that the result of the recording condition learning varies depending on the recorded/unrecorded states of the nearer-side layer (L1). In these documents, the learning is performed in a state where the nearer-side layer is always unrecorded. This is implemented by setting test areas for the optimum recording power control over a plurality of recording layers so that these test areas do not overlap with each other. Also, in JP-A-2008-192258, the problem of the error in the optimum recording power control is avoided by employing the following scheme: Namely, the recording power is learned in both of a case where another layer is in the recorded state and a case where another layer is in the unrecorded state. Moreover, the average value of the recording powers learned is assumed.

## SUMMARY OF THE INVENTION

In JP-A-2005-038584 and JP-A-2004-327038, the disclosure has been made concerning the above-described scheme for setting the test areas for the optimum recording power control over the plurality of recording layers so that radial positions of these test areas become different from each other. Nevertheless, if this scheme is applied to a multilayered optical disc having a plurality of (three or more) recording layers, the following problem has existed:

In both of the above-described prior art documents, there is provided the method for preventing the learning result on the learning areas from being influenced by the presence or absence of the recording on the nearer-side layer. This method, however, finds it impossible to solve the problem that the optimum recording power on the user data area is influenced by the presence or absence of the recording on the nearer-side layer. In particular, in a multilayered optical disc having three or more recording layers, when performing the recording onto the farther-side layer positioned on the farther side when seen from the light incident surface, the recording is performed through the two or more recording layers positioned on the nearer side. As a result, the influence of the recording/unrecording on the nearer-side layer becomes more than two times influential. Consequently, the adjustment of the optimum recording power on the user data area is an important problem.

It is an object of the present invention to provide a recording method for the multilayered optical disc onto which the recording is implementable in such a manner that the laser irradiation power onto each recording layer is controlled appropriately.

In order to accomplish the object of the present invention, the method of claim 1 is devised and employed.

In the conventional multilayered optical disc, there has existed the problem that the optimum recording power (i.e., effective recording sensitivity) is caused to vary by a difference in the recording state of the layer positioned on the light incident side. The application of the present invention, however, allows the influence of this problem to be suppressed down to the smallest possible degree, thereby making it possible to always ensure the high-quality user-data recording quality. Namely, in the present invention, it becomes possible to record the optimum recording power, which is determined as a result of the recording power learning on a area such as the OPC (: Optimum Power Control) area, in such a manner that the optimum recording power is compensated in correspondence with the recorded/unrecorded states of another layer. Accordingly, this compensated recording makes it possible to enhance reliability of the recording quality in the user recording area. In the conventional multilayered optical disc, there has existed the problem that, as the recorded areas increase in number, the recording quality becomes degraded. In contrast thereto, in the present invention, the enhancement in reliability of the recording quality always maintains the error ratio at a value of about $10^{-5}$ or less, thereby maintaining the excellent recording quality successfully. As having been described so far, according to the present invention, it becomes possible to suppress the influence exerted by the difference of whether another layer is recorded or unrecorded at the time of learning the recording power, thereby allowing the successful execution of the high-quality recording. Namely, the present invention allows the enhancement in reliability of the user recording information.

Other objects, features and advantages of the invention will become apparent from the following description of the embodiments of the invention taken in conjunction with the accompanying drawings.

## BRIEF DESCRIPTION OF THE DRAWINGS

Fig. 1A to Fig. 1C are diagrams for illustrating the overview of the present invention;
Fig. 2 is the diagram for illustrating the structure of the multilayered optical disc and the principle on which the recording/reproduction is performed in a manner where each layer is independent of each other;
Fig. 3 is the diagram for explaining the problem of the conventional multilayered optical disc;
Fig. 4 is a diagram for illustrating an example of the recording/reproduction device for the multilayered optical disc of the present invention;
Fig. 5A and Fig. 5B are the diagrams for explaining the problem of the conventional multilayered optical disc;
Fig. 6 is a diagram for illustrating the arrangement of a lead-in area and a user data area of the multilayered optical disc of the present invention;
Figs. 7A-7C are diagrams for explaining a detection method for asymmetry, i.e., indicator for the recording-power adjustment;
Figs. 8A-8C are diagrams for explaining a detection method for β, i.e., the indicator for the recording-power adjustment;
Fig. 9 is a diagram for illustrating a variation in the recording characteristics in a case where the entire area of another layer is unrecorded and in a case where the entire area of another layer is recorded;
Fig. 10 is a diagram for illustrating the result of the recording-power adjustment in the conventional multilayered optical disc;

Fig. 11 is a diagram for illustrating the range of the optimum recording power for the multilayered optical disc in an embodiment of the present invention;

Fig. 12 is a diagram for illustrating a variation in the recording characteristics on a recording-power adjustment area in the embodiment of the present invention;

Fig. 13 is a diagram for illustrating the result of the recording adjustment on the recording-power adjustment area in the embodiment of the present invention;

Fig. 14 is a diagram for illustrating effects of the present invention;

Fig. 15A to Fig. 15C are diagrams for illustrating a usage method for the recording-power adjustment area in the embodiment of the present invention; and

Fig. 16 is a diagram for illustrating a recording-power compensation method in the embodiment of the present invention adjustment.

DETAILED DESCRIPTION OF THE INVENTION

Hereinafter, a detailed explanation will be given below concerning examples and an embodiment of the present invention.

(Example 1)

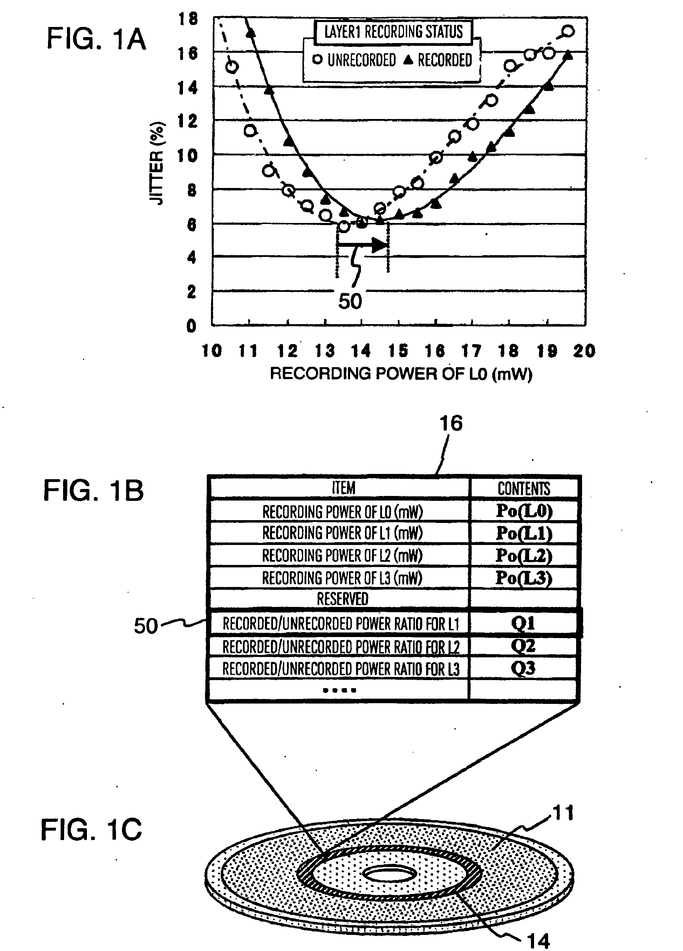

Fig. 1A to Fig. 1C are diagrams for illustrating an example of the four-layer recordable-type optical disc to which the present invention is applied. The optical disc in the present embodiment includes four recording layers, i.e., L3, L2, L1, and L0, which are arranged from the side nearest to the light incident surface. Namely, the L0 recording layer is positioned on the farthest side from the light incident surface.

Fig. 1A is the diagram for illustrating the relationship between the recoding power and the recorded-signal quality (i.e., jitter) of the L0 layer. Being similar to the case of the currently-available Blu-ray Disc, the recording capacity is equal to 25 GB, the wavelength of light used for the recording/reproduction is equal to 405 nm, and the numerical aperture (NA) of the objective lens is equal to 0. 85. The jitter in the longitudinal axis, which indicates the recorded-signal quality, is measured using the limit equalizer determined based on the Blu-ray Disc Standard. As illustrated in Fig. 1A, the recording characteristics of the L0 layer differs depending on the recording state of the L1 layer which is positioned on the nearer side to the light incident surface than the L0 layer. Namely, the recording-characteristics curve in the case where the L1 layer is recorded shifts to the higher-power side as compared with the recording-characteristics curve in the case where the L1 layer is unrecorded. This shift is caused to occur by a phenomenon that the transmittance of the L1 layer is effectively lowered by a recording mark recorded on the L1 layer, and that the optical power supposed to reach the L0 layer is effectively lowered by the influence of the effective lowering in the transmittance. Namely, when the recording is performed onto a certain layer (first layer), the optimum recording power for the first layer is caused to vary by the presence or absence of the recording on a second layer positioned on the nearer side to the light incident surface than the first layer. This variation ratio 50 in the recording power depends on the characteristics of a recording film of the second layer.

In view of this situation, as the disc control information (DI) illustrated in Fig. 1B, this variation ratio 50 in the recording power is recorded in advance into a management area 14 on the disc illustrated in Fig. 1C. Here, this variation ratio is recorded in advance onto the disc as the groove wobble for indicating addresses or the like on the disc and as read-only information. In the present example, the information about the optimum recording power for each layer indicates the optimum recording power in the case where another layer is unrecorded. Also, the rate of the optimum recording power (i.e., recording-power variation ratio = recording-power compensation coefficient) in the case where another layer is recorded with respect to the optimum recording power in the case where another layer is unrecorded is recorded as the variation-ratio information Qi. However, the optimum recording power in the recorded case and the optimum recording power in the unrecorded case may also be recorded, respectively. In whatever case, the use of a simple conversion expression allows acquisition of the equivalent information.

In subsequent examples, the detailed explanation will be given concerning a drive operation at the time when the recording is actually performed onto the user area using the above-described recording-power variation ratio information recorded onto the disc. In any case, in the present example, the information about the sensitivity variation caused by the presence or absence of the recording on the nearer-side layer is recorded in advance onto the disc as the disc information. This condition, when making the recording-power adjustment using the above-described drive, allows the recording power to be set and adjusted such that the influence caused by the presence or absence of the recording is taken into consideration in advance. As a result, setting accuracy for the recording power is enhanced, which makes it easy to execute the high-quality recording.

In the present example, the difference caused by the presence or absence of the recording on the nearer-side transmission layer is recorded as the DI information. There also exists a method, however, that the information about the sensitivity variation is held as a two-dimensional arrangement based on a combination of the transmission layer and the recording target layer. From a first-approximation standpoint, the influence of the variation in the transmittance of the transmission layer depends on only the characteristics of the transmission layer itself. There also exists a possibility, however, that the sensitivity variation is subjected to a subtle influence by an interlayer distance between the transmission layer and the recording target layer. Accordingly, when the information about the sensitivity variation is recorded as the two-dimensional arrangement, the recording-power control becomes executable where this subtle influence is taken into consideration.

From the point-of-view of multilayered-recording compatibility, it is desirable to specify in advance the range of the recording-sensitivity compensation value to be recorded onto the disc. For example, it is desirable to set the per-layer sensitivity variation ratio at a value which falls within 5 % at the maximum. Namely, it is preferable to specify $0.95 \leqq Q \leqq 1.05$ as the range of the recording-sensitivity compensation coefficient. The reason for this is as follows: This numerical value of 5 % is a value which is basically the same as the power-adjustment error range of a general optical disc device. Accordingly, if there occurs an error which exceeds 5 %, there is a danger that the power-adjustment system itself may collapse. Also, the value acquired by multiplying the recording-sensitivity compensation coefficients of all the respective layers appears as the recording-power variation in the layer positioned on the farthest side from the light incident surface. Consequently, it is desirable to specify in advance the range of this multiplied value as well. It is preferable to set the range of this multiplied value at a value within about 10 %, which is basically the same as the power-margin range of an ordinary optical disc.

(Example 2)

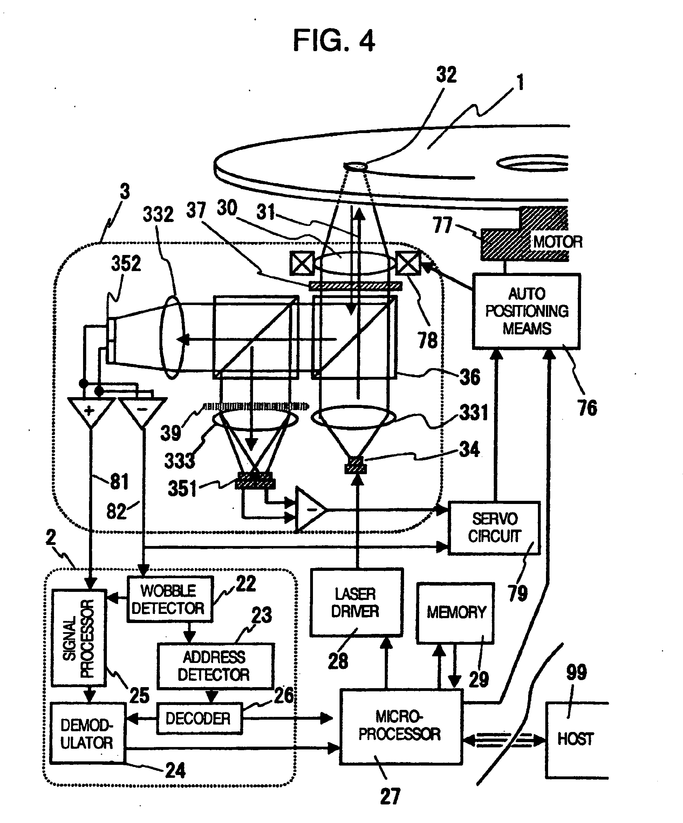

Next, Fig. 4 illustrates an example of the recording/reproduction device for performing the recording/reproduction onto/from the multilayered optical disc described in the first example. A light beam (whose wavelength is equal to about 405 nm) is emitted from a laser light-source 34 which is a partial component of an optical header 3. Then, the light beam is caused to pass though a collimator lens 331, thereby being collimated into a light beam which is substantially parallel. Next, the collimated light beam is caused to pass though a beam splitter 36, an aberration compensation element 78, and an objective lens 30, thereby being projected and focused onto an optical disc 1 as a focusing light 31, and thereby forming an optical spot 32. A reflected light from the optical disc 1 is caused to pass though the beam splitter 36 and a holographic element 39, then being guided to a servo detector 351 and a signal detector 352 by detection lenses 332 and 333. Signals outputted from the respective detectors are subjected to an addition/subtraction processing, thus becoming servo signals such as a tracking error signal and a focus error signal, and then being inputted into a servo circuit 79. Based on the tracking error signal and the focus error signal acquired, the servo circuit 79 controls the entire position of an objective-lens actuator 78 and the optical header 3, thereby positioning the position of the optical spot 32 onto a target recording/reproduction area. The addition signal outputted from the signal detector 352 is inputted into a signal reproduction block 2. The inputted signal is subjected to a filtering processing, a frequency equalizing processing, and a digitizing processing by a signal processor 25. Address information formed on the disc in the form of the groove wobble is detected as a differential signal from a division detector 352, then being inputted into a wobble detector 22 inside the signal reproduction block 2. The wobble detector 22 has a function of generating clocks synchronized with the wobble signal and discriminating the wobble waveform. The wobble signal detected by the wobble detector 22 is converted into digital information by an address detector 23. After that, this digital information is subjected to an error correction processing by a decoder 26, then being detected as address information. Based on the address information detected, a start timing signal for the recording/reproduction processing is generated, thereby controlling a demodulator 24 for the user data. Simultaneously, the address information is transmitted to a controller (i.e., microprocessor) 27 as well, then being used for the access or the like.

The method for performing the recording/reproduction onto/from the multilayered optical disc using the optical-disc recording/reproduction device like this is basically the same as the method described in the conventional technologies. For example, in the case of accessing the five-layer recording medium illustrated in Fig. 2, the position of the objective lens 30 is controlled, thereby positioning the position of the optical spot 32 onto a target recording layer (e.g., fifth recording layer). Namely, the optical spot lies in the focused state on the target recording layer. At this time, the converging light beam 31, which is in the course of being focused by the objective lens 30, passes through the other semitransparent recording layers (e.g., fourth layer and third layer) positioned on the nearer side. On these other recording layers, however, the light-beam diameter of the converging light beam 31 is sufficiently larger as compared with the diameter of the optical spot 32 on the target recording layer. This condition makes it impossible to analyze and reproduce the recorded information on the other semitransparent recording layers with the use of this converging light beam 31. Namely, it is possible to reproduce the information on the target layer without suffering from the influence of the information on the other layers. Also, since the light-beam diameter is sufficiently larger on the recording layers other than the target layer, the per-unit-area light intensity becomes relatively smaller thereon. Accordingly, at the time of the recording as well, there exists no necessity for worrying about a crash of the information on the recording layers other than the target layer. In this way, the recording/reproduction of the information on the multilayered optical disc is implemented.

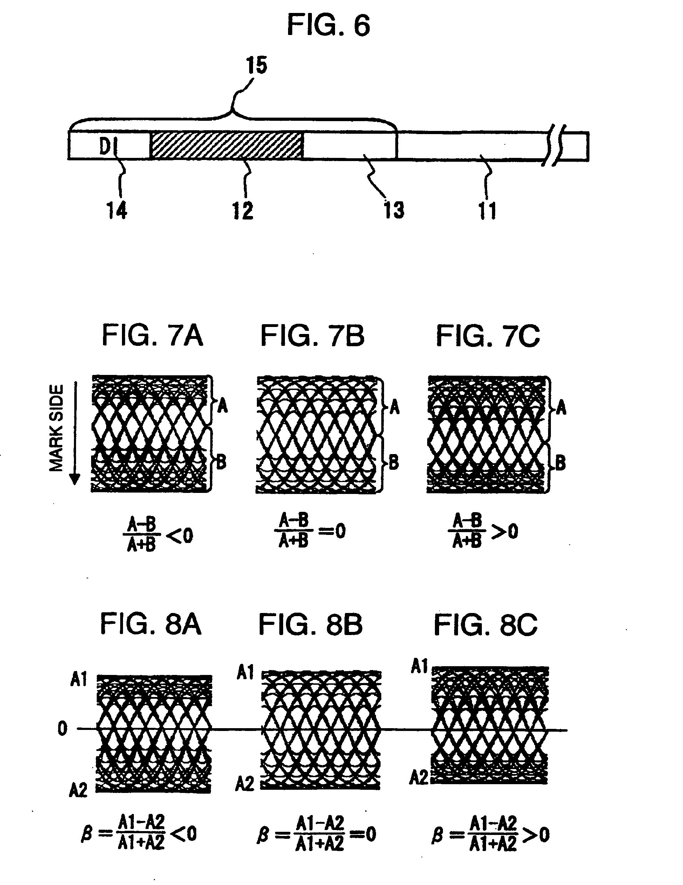

The general methods for learning the recording power using the recording/reproduction device like this are a method of detecting the asymmetry of a signal as illustrated in Figs. 7A-7C and Figs. 8A-8C, and a method of evaluating the power dependence of amplitude (modulation) of a signal. Figs. 7A-7C illustrate an indicator which is referred to as "asymmetry" in general, and a method of measuring amplitudes from the center of eye-pattern of a signal to upper-side and lower-side envelopes of the signal. Letting the amplitude from the upper-side (space-side) envelope to the center of the eye-pattern be A, and letting the amplitude from the lower-side (mark-side) envelope to the center of the eye-pattern be B, the asymmetry is defined as being (A - B)/(A + B). As the recording power becomes larger, the asymmetry varies from a negative value to a positive value. In some cases, the asymmetry under the recording condition with the optimum power exhibits a slight amount of (i.e., a few %) offset depending on characteristics of the optical-disc recording film, but the optimum power substantially lies in proximity to zero. Figs. 8A-8C illustrate an evaluation indicator which is referred to as "β". In this case, instead of determining the center of the eye-pattern, the DC component is eliminated using a high pass filter. Moreover, the upper-side and the lower-side envelope amplitudes A1 and A2 are determined with the AC-coupled zero point selected as the criterion, then determining β = (A1 - A2)/(A1 + A2). Although there is a slight difference between the two methodologies, what is common to both methodologies is that the optimum power lies in proximity to zero. In many cases, one of the two methodologies is selected depending on configuration of circuit system of the device. No explanation will be given here concerning the method of evaluating the power dependence of amplitude (modulation) of a signal. Since, in this method, the DC amplitude is detected, the detection accuracy is apt to become worse in a system like the multilayered optical disc where the influence of a leakage light and stray light is likely to become influential.

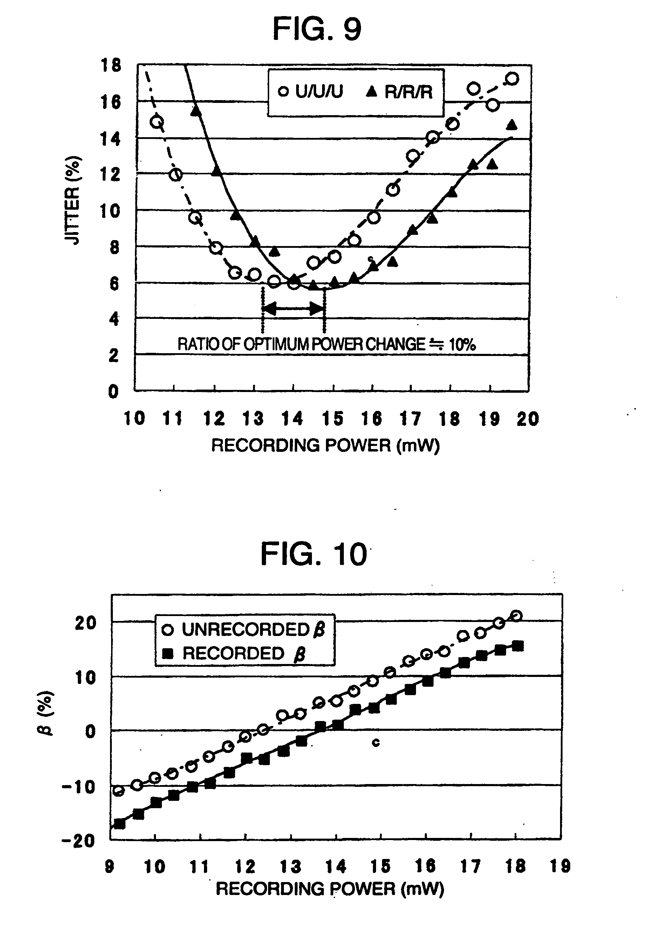

Next, Fig. 9 illustrates an example where the recorded-signal quality of the four-layer recordable-type optical disc illustrated in the first example is evaluated as the jitter. This example illustrates the recording characteristics of the L0 layer positioned on the farthest side from the light incident surface. The recording characteristics (i.e., recording margin curve) of the farthest-side target layer differs significantly between a case where all of the three layers L1, L2, and L3 positioned on the nearer side are in the recorded state and a case where all of the three layers L1, L2, and L3 are in the unrecorded state. The cause for this phenomenon is as follows: When recording information onto a farther-side layer which is positioned on the farther side when seen from the light incident side, a difference occurs in the effective transmittance of a nearer-side layer between a case where the information is recorded onto the farther-side layer via an unrecorded area on the nearer-side layer and a case where the information is recorded onto the farther-side layer via a recorded area on the nearer-side layer. As a result of this difference in the effective transmittance of the nearer-side layer, a difference occurs in the laser power which finds it possible to reach the farther-side layer eventually. Namely, the cause for the variation in the recording characteristics is that the recording power sensitivity differs effectively, and that the effective recording power varies.

Fig. 10 illustrates an example where the β value of the recorded information is evaluated which is recorded onto the user data area of the farthest-side L0 layer. If the information is recorded onto the nearer-side two layers, the β value is lowered. Namely, the optimum recording power shifts to the relatively-higher-power side, thereby lowering the effective recording power. In the optical disc in the present example, this variation in terms of the recording power is equal to 10 % at the maximum.

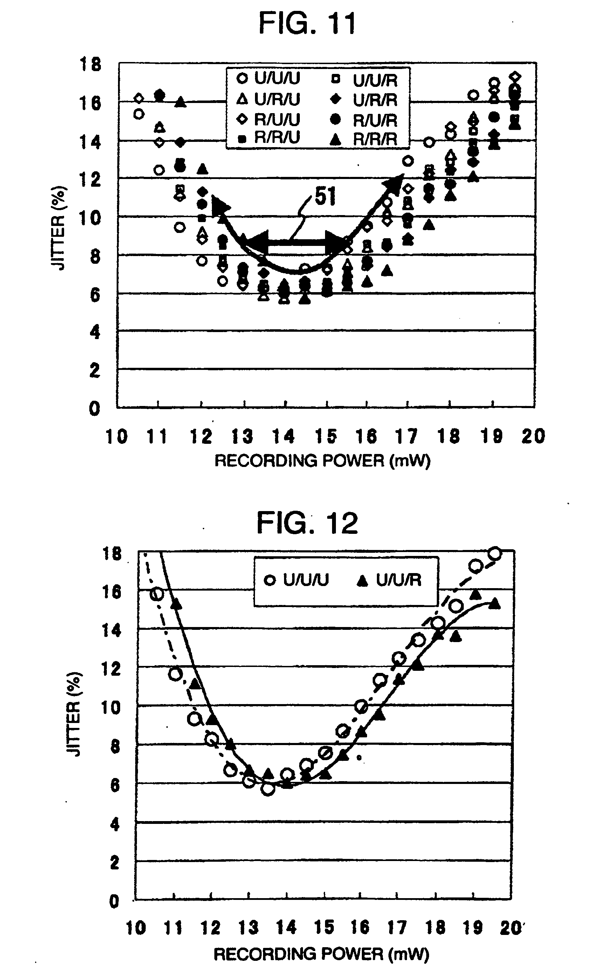

Being similar to Fig. 9, Fig. 11 illustrates the recording characteristics of the L0 layer positioned on the farthest side from the light incident surface. The recording characteristics, however, are recording characteristics for eight states which are equivalent to all the combinations of the recorded/unrecorded states of L1, L2, and L3 layers positioned on the nearer side. The recording characteristics (i.e., recording power) vary depending on the recording states of each layer. Assuming envelopes for the recording characteristics of each layer, however, makes it possible to acquire a power range, i.e., a power margin 51 in which the sufficiently-high recording quality is made available. Accordingly, by setting the recording power in the drive into the range of this power margin 51, it becomes possible to always implement the high-quality recording independently of the recording states of another layer. Nevertheless, actually measuring the recording characteristics by implementing the combination of all the recordings/reproductions of the other layers (in order to derive the range of this power margin 51 using the actual drive) is not realistic from the point-of-view of wastes of the learning time and recording areas. In view of this situation, in the present example, a method for estimating this power-margin range by taking advantage of the power-sensitivity variation ratio information (Qi) is devised and applied. Here, the power-sensitivity variation ratio information (Qi) is recorded in advance onto the disc as the disc control information (DI), and corresponds to the recorded/unrecorded states of each layer.

Concretely, in the multilayered optical disc including N (N = 4 in the present example) layers of recording layers, the influences of the transmission layers positioned on the nearer side to the light incident surface than the recording target (j-th) layer are integrated with each other. As a result, the recording-sensitivity compensation coefficient (i.e., recording-power variation ratio) is also represented by the product of the recording-power compensation coefficients of all the respective layers. Since the recording-sensitivity compensation coefficient in the first example is defined selecting the unrecorded state as its criterion, the recording-sensitivity compensation coefficient for the unrecorded state is equal to 1. Accordingly, when letting the recording-sensitivity compensation value be Qi, the compensation coefficient for a combination in which the integrated recording-sensitivity compensation value becomes its maximum is given by the following Expression 2:

$$\prod_{i=j+1}^{N} \max(Qi, 1) \qquad \text{(Expression 2)}$$

Meanwhile, the compensation coefficient for a combination in which the integrated recording-sensitivity compensation value becomes its minimum is given by the following Expression 3:

$$\prod_{i=j+1}^{N} \min(Qi, 1) \qquad \text{(Expression 3)}$$

Consequently, an average value (i.e., intermediate value) of both of the compensation coefficients is defined as the resultant compensation coefficient. This definition makes it possible to acquire the recording-power compensation value, which is equivalent to the intermediate value between the case where the maximum recording power is necessary for the combination of the recorded/unrecorded states of each layer (i.e., the product of the recording-power compensation coefficients is its maximum) and the case where the minimum recording power is necessary for the combination of the recorded/unrecorded states of each layer (i.e., the product of the recording-power compensation coefficients is its minimum). This intermediate value substantially coincides with the median value of the power margin 51 in Fig. 11. Accordingly, it becomes possible to set the recording power in the drive into the range of the power margin 51 without performing, within the drive, the evaluation of the recording characteristics corresponding to the recorded/unrecorded states of each layer. This setting always allows the implementation of the high-quality recording independently of the recording states of another layer.

Here, the recording-power compensation value is defined selecting, as its criterion, the optimum recording power corresponding to the case where another layer is in the unrecorded state. This condition requires that the optimum recording power in the case where another layer is in the unrecorded state be determined at the time of learning/adjusting the optimum recording power. Fig. 12 is a diagram for illustrating the variation in the recording-power margin on a recording-power adjustment area (i.e., OPC area) of the multilayered optical disc according to an example of the present invention. On the recording-power adjustment area, the recording state of another layer is controlled appropriately. As a result, the variation amount of the recording power is not so large as the ordinary user area. Accordingly, it is possible to obtain the value which is substantially the same as the optimum recording power in the case where another layer is in the unrecorded state (almost negligible as compared with Fig. 9). In a third example, the detailed explanation will be given concerning another example of the method for allowing the optimum recording power corresponding to the unrecorded state to be determined without fail on the recording-power adjustment area.

In this way, when actually performing the recording onto the user area using the optimum recording power determined, the recording is performed using a value which is acquired by multiplying the determined optimum recording power by the average value of both of the above-described compensation coefficients, i.e.,

$$\left( \prod_{i=j+1}^{N} \max(Qi, 1) + \prod_{i=j+1}^{N} \min(Qi, 1) \right) \bigg/ 2 \qquad \text{(Expression 4)}$$

In the present example, when the recording is performed onto the L0 layer, the above-described value acquired by the multiplication has turned out to be 1. 05 (+ 5 %). This result means that, by performing the recording using the recording power with the about 5 % increase, it becomes possible to perform the recording only with a 5 % or less power error at the largest for both of the area where the recording power sensitivity is its maximum and the area where the recording power sensitivity is its minimum. This result is in contrast to the fact that, in the case where all of the nearer-side layers are in the recorded state, the necessary power increases by the amount of 10 % as compared with the case where all of the nearer-side layers are in the unrecorded state. Since, in the multilayered optical disc of the present invention, the essential recording-power margin is equal to about $\pm$ 13 %, this 5 % error is tolerable. If, however, the recording method of the present invention is not applied, it turns out that the 10 % power error will occur, and that the margin seldom exists. This consequence becomes a cause for permitting some other outer disturbance such as disc tilting to give rise to an additional error.

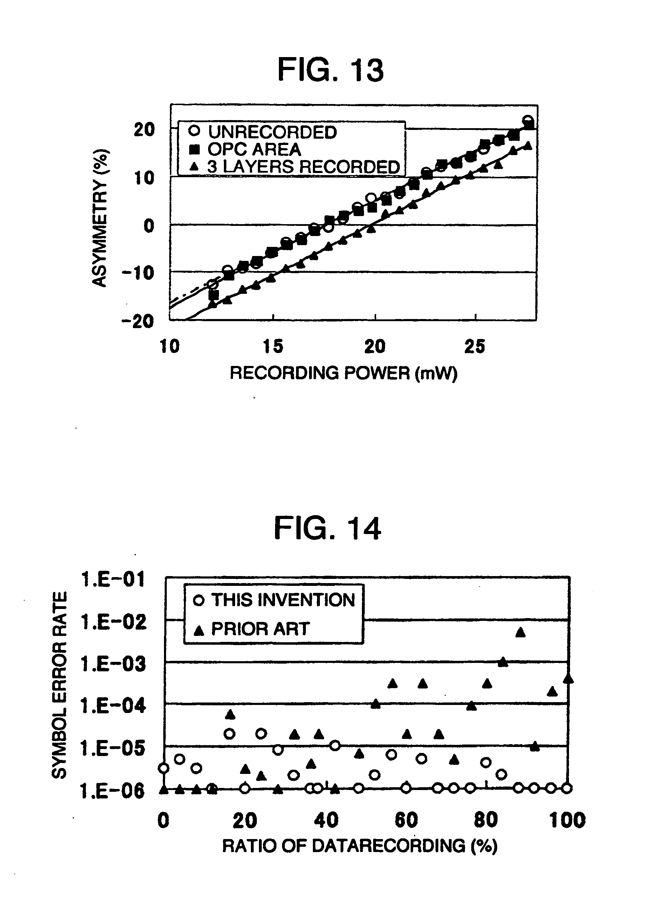

Fig. 14 illustrates an example where the quality of recoded data is evaluated between the case where the recording is performed using the recording method of the present invention and the case where the recording is performed using the conventional recording method. The longitudinal axis denotes the symbol error rate. The lower the symbol error rate becomes, the higher the recording quality becomes. In the present invention, the error ratio is maintained at a value of about $10^{-5}$ or less independently of the recorded rate, thereby making it possible to maintain the excellent recording quality. In the conventional recording method, however, the error ratio increases as the recorded rate increases. This phenomenon indicates the following: In the conventional method, the extent in which the recording power moves away from the optimum recording power heightens as the recorded rate increases. Then, the resultant reduction in the optical transmittance on another layer causes the recording to be performed such that the effective recording power runs short, and the recording quality lowers accordingly. Namely, the application of the present invention always allows the execution of the high-quality recording of the user data independently of the recorded/unrecorded states of another layer.

(Example 3)

Fig. 6 illustrates the outline of a manner of the arrangement of a user data area 11 and a test area 12 for learning/adjusting the recording/reproduction condition on the recording power in the multilayered optical disc of the present invention. In the present example, the test area 12 is disposed on the inner-circumference side than the user data area 11.

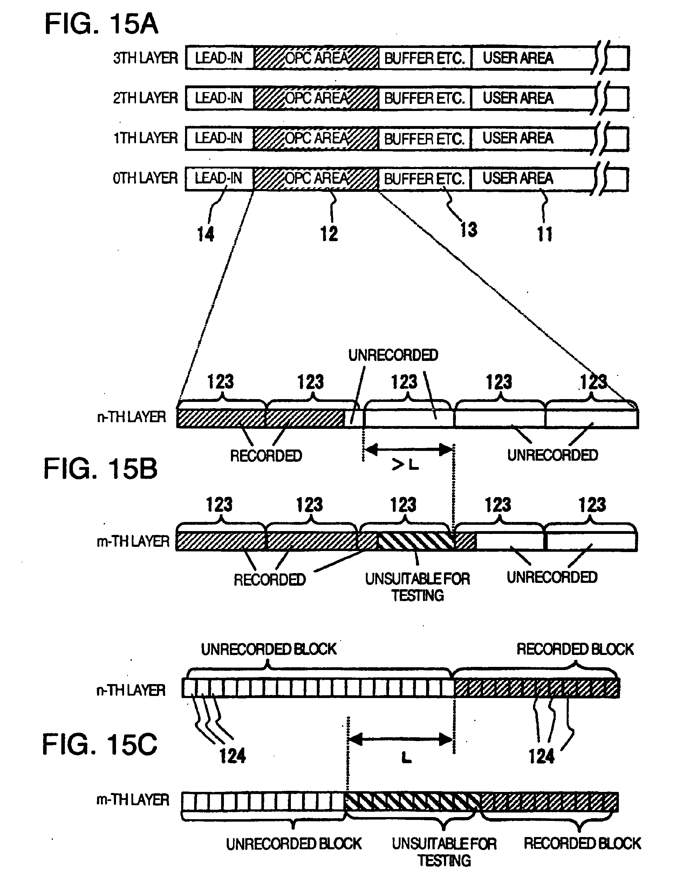

Fig. 15A to Fig. 15C illustrate the details of how the respective areas are disposed on the multilayered optical disc (four-layer optical disc in the present example). Fig. 15A illustrates how the respective areas are disposed on the plurality of recording layers. Here, the respective areas are the user data area 11, the test area 12, a disc-control-information (DI) storage area 14, and an area 13 for recording a buffer area, i.e., an inter-area buffer area, and a control-information recording area. In Fig. 15A, the left side is the disc inner-circumference side, and the right side is the disc outer-circumference side. A 0-th layer is positioned on the farthest side from the light incident surface, and a 4th layer is positioned on the nearest side to the light incident surface. Namely, the fifth recording. layer 415 illustrated in Fig. 2 corresponds to the 0-th layer in the present example, and the first recording layer 411 illustrated in Fig. 2 corresponds to the 3rd layer in the present example. The minimum value of each interlayer spacing between the respective layers is equal to about 11 $\mu$m (, although each interlayer spacing is made different on each layer basis so that the influence of interlayer crosstalk becomes its minimum). In the multilayered optical disc in the present example, the test area 12 is referred to as "Optimum Power Control area (: OPC area)" in the meaning of the learning area used for controlling the recording power optimally. The test area 12 on each layer is positioned at substantially the same radial position.

Fig. 15B illustrates segmentation within the test area 12, where a plurality of segments (i.e., small areas) 123 are disposed. Each segment 123 includes a plurality of recording unit blocks. In Fig. 15B, the following segments exist in a mixed manner: A segment whose entire area is recorded, a segment whose partial area alone is recorded, and an unrecorded segment. In Fig. 15B, a partial area of the segment is recorded which is the second segment from the left on a layer (i.e., n-th layer) nearer to the light incident surface. Accordingly, the unrecorded area of the segment, which is disposed in the center of an m-th layer existing within the radial range L from the segment on the m-th layer, is judged as being a testing-unsuitable area. Consequently, the test recording is performed on the area which is the second area from the left. Within the radial range L, there is a possibility that the presence or absence of the recording on a certain layer may exert its influence on the recording characteristics of another layer. In the present example, the radial length of each segment is set at a value which is larger than the radial range L. This radial range L is acquired by adding the maximum value of radial-position tolerance at the time of disc manufacturing and the maximum value (75 $\mu$m) of interlayer relative run-out to the light-beam diameter at a position which is away from the focal-point position by the amount of each interlayer spacing. The areas existing within the range of this L has a possibility of being substantially overlapped with each other, considering an expansion amount of the light-beam diameter whose radial position is on the transmission layer in the worst case of the radial-position shift and interlayer run-out caused by a variation in the disc manufacturing. Accordingly, like the present example, the segment on the m-th layer (i.e., layer farther from the light incident surface) positioned within the radial range L from the recorded segment on the n-th layer, i.e., the adjacent segment, is judged as being the testing-unsuitable area. Consequently, the adjacent segment is determined not to be used for the recording test such as the power learning. This determination allows the accurate learning to be executed without suffering from the influence of the recording on the transmission layer (i.e., n-th layer).

Fig. 15C illustrates another example of the usage method for the test area 12. In this example, each segment coincides with the smallest recording unit (i.e., recording block or recording cluster). It turns out that, since the recording block is smaller than the radial range L, a plurality of recording blocks are positioned within the radial range L. Consequently, the plurality of recording blocks become testing-unsuitable blocks.

Here, the explanation will be given below concerning the radial range L. Consideration will be given to a case where, after performing the test recording onto a 2nd recording layer, the recording is performed onto a 1st recording layer which is away from the 2nd recording layer by the interlayer spacing d, and which is positioned on the farther side from the light incident surface than the 2nd recording layer. The light-beam diameter on the 1st recording layer which is away from the 2nd recording layer by the interlayer spacing d becomes equal to [2 d × (NA/n)/(1 - (NA/n) ^ 2) ^ (1/2)] ≈ 25 μm, when taking advantage of the NA of the objective lens = 0.85 and the refractivity n of the interlayer spacing layer = 1. 6, and when the interlayer spacing d is equal to, e.g., 30 μm. The value (200 μm), which is acquired by adding the maximum value (100 μm) of the radial-position tolerance at the time of disc manufacturing and the maximum value (75 μm) of the interlayer relative run-out to the above-described value of 25 μm, is the radial range L within which there is a possibility that the presence or absence of the recording on a certain layer may exert its influence on the recording characteristics of another layer. Consequently, the recording test such as the power learning is determined not to be performed using the test recording blocks on the 1st recording layer which are positioned within this radial range L. This determination allows the test recording to be executed on the test area on the 1st recording layer without suffering from the influence of the recording on the test area on the 2nd recording layer positioned on the nearer side to the light incident surface.

Methods for judging the testing-unsuitable blocks as being testing-unsuitable are as follows: A method of making the comparison of the block addresses among the plurality of layers, a method of recording dummy data onto the testing-unsuitable blocks in advance, and a method of recording, onto the control area (temporary disc definition structure: TDDS), information for indicating that the testing-unsuitable blocks are testing-unsuitable. From the point-of-view of inter-drive compatibility, it is desirable to combine these plurality of methods with each other. Fig. 13 is a diagram for illustrating the reproduction result of a test recording signal for the recording-power adjustment acquired by the application of the test-area (OPC-area) usage method of the present invention. The β value illustrated in Figs. 8A-8C are employed as the indicator for the recording-power adjustment. The reproduction result shows that the β value corresponding to "unrecorded" is obtained on the OPC area, and that the optimum recording power corresponding to the unrecorded state can be determined without fail.

(Example 4)

In the second example, the method illustrated in Fig. 11 for deriving the optimum recording power using the power-sensitivity variation ratio information (Qi) has been devised and applied. Here, the power-sensitivity variation ratio information (Qi) is recorded in advance onto the disc as the disc control information (DI), and corresponds to the recorded/ unrecorded states of each layer. More concretely the optimum recording power is derived by compensating for the recording power using the recording-power compensation value which is equivalent to the intermediate value between the case where the product of the recording-power compensation coefficients of all the respective layers is its maximum and the case where the product of the recording-power compensation coefficients of all the respective layers is its minimum. Meanwhile, in the present example, the more accurate power control will be performed by recognizing the recording state of each layer.

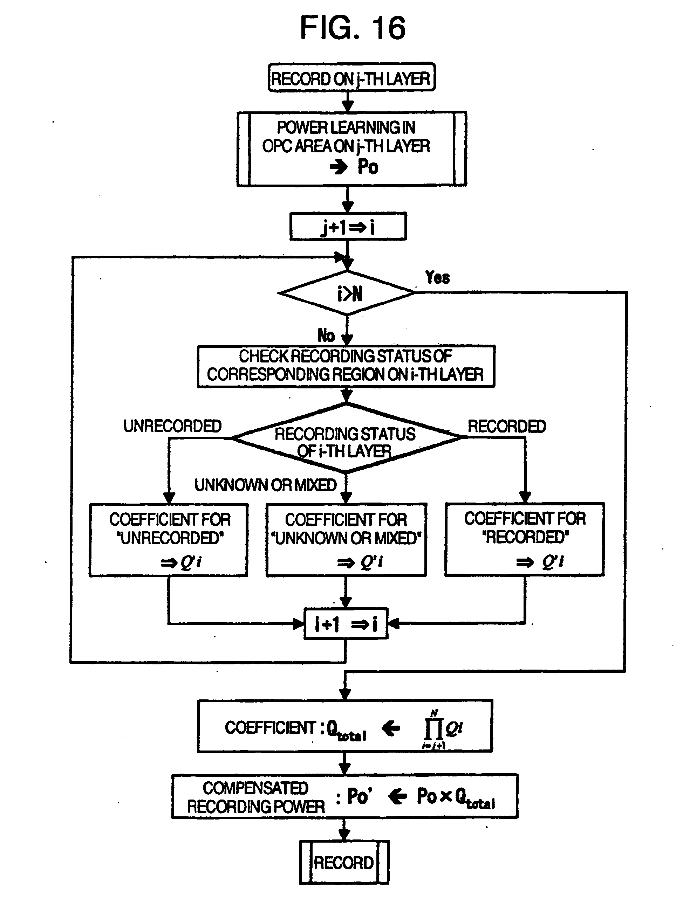

Hereinafter, in accordance with a flowchart illustrated in Fig. 16, the explanation will be given below concerning the operation in the present example. When performing the recording onto a j-th layer, the optimum recording power Po is derived using the method described in the third example. Here, the optimum recording power Po corresponds to the case where all of the layers positioned on the nearer side to the light incident surface than the j-th layer are in the unrecorded state. Next, it is checked whether an i-th layer, which is positioned on the nearer side to the light incident surface than the j-th layer, is in the recorded state or the unrecorded state. Then, (1) if the i-th layer is in the unrecorded state, the compensation coefficient corresponding to the unrecorded state is defined and employed as the compensation coefficient Q'i for the i-th layer, (2) if the i-th layer is in the recorded state, the compensation coefficient corresponding to the recorded state is defined and employed as the compensation coefficient Q'i for the i-th layer, or (3) if the judgment on the recorded/unrecorded states cannot be made, or if the recorded/unrecorded states exist in a mixed manner, the value equivalent to an average value of the compensation coefficient corresponding to the unrecorded state and the compensation coefficient corresponding to the recorded state is defined and employed as the compensation coefficient Q'i for the i-th layer. This processing step is applied to all of the layers positioned on the nearer side to the light incident surface than the j-th layer, thereby determining the compensation coefficients Q'i for the respective layers, j+1 ≦ I ≦ N. Moreover, the product of these compensation coefficients Q'i, i.e.,

$$\prod_{i=j+1}^{N} Q'_i \qquad \text{(Expression 5)}$$

is defined and employed as total compensation coefficient $Q_{total}$. Finally, the recording is performed under the condition that a value Po', which is acquired by multiplying Po by this $Q_{total}$, is defined and employed as the compensated recording power.

Here, when it is judged whether each layer is in the recorded state or the unrecorded state, information for managing the recorded/unrecorded states of each layer are used, such as recording control information, defect management information, and Space Bit Map. At this time, it is desirable that the recording state in the range be checked by taking into consideration not only the recording state of an area whose radial position is the same as that of the target recording area, but also the radius shift due to interlayer run-out and manufacturing error and size of the light beam on another layer. After the checking is made in this way, it is judged whether the range checked is in the recorded, unrecorded, or mixed state.

According to the method in the present example, it becomes possible to perform the recording in such a manner that the recording power is used which is made more accurate and suitable in correspondence with the recorded/unrecorded states of each layer. Accordingly, it becomes possible to set the recording power in the drive into the range of the power margin 51. This setting always allows the implementation of the high-quality recording which is made to correspond to the recording states of another layer successfully.

(Embodiment 5)

In the first and second examples, the method illustrated in Fig. 11 for deriving the optimum recording power using the power-sensitivity variation ratio information (Qi) has been devised and applied. Here, the power-sensitivity variation ratio information (Qi) is recorded in advance onto the disc as the disc control information (DI), and corresponds to the recorded/unrecorded states of each layer. More concretely the optimum recording power is derived by compensating for the recording power using the recording-power compensation value which is equivalent to the intermediate value between the case where the product of the recording-power compensation coefficients of all the respective layers is its maximum and the case where the product of the recording-power compensation coefficients of all the respective layers is its minimum. In contrast thereto, in the present embodiment, the target value for the optimum recording power to be determined on the recording-power adjustment area (i.e., OPC area) is set at and is made equal to the power range which is acquired by assuming the envelopes for the recording characteristics corresponding to all the combinations of all the recorded/unrecorded states positioned on the nearer side to the light incident surface than the recording target layer, i.e., the central power Po'of the power margin 51 illustrated in Fig. 11. The recording characteristics on the OPC area are that all the layers thereon exhibit the recording characteristics close to the ones in the unrecorded state. Accordingly, the power at which the recording characteristics on the OPC area become the highest is substantially equal to the optimum recording power at the time when all the layers are in the unrecorded state. In contrast thereto, in the present embodiment, the optimum recording power is set at the central power Po'of the power margin 51 illustrated in Fig. 11. This power differs from the power Po at which the recording characteristics on the OPC area become the highest. The target value (i.e., OPC parameter) for the recording power learning, however, is set so that the recording result of the recording power on the OPC area becomes equal to the central power Po'. Then, this target value is described and recorded onto the disc control information area (DI) in advance. In the case of this method, merely by taking advantage of the recording result of the recording power on the OPC area directly, it becomes possible to ensure the recording quality which is equivalent to the one in the second example. In contrast thereto, the method explained in the fourth example is inapplicable which is devised for precisely adjusting the recording power depending on whether another layer is in the recorded state or the reproduced state. However, by appropriately selecting the OPC-control target value to be recorded as the disc control information (DI), it is made possible to ensure the recording quality as is the case with the other examples.

If the present embodiment is represented using other technical terms, its representation is given as follows: The control target parameter for the recording power learning is set so that, when the recording is performed onto the user area using the power learning result on the recording-power learning area, the user-data signal quality (i.e., jitter) will always satisfy a predetermined quality (i.e., standard specified range).

The effects of the present invention are not limited to the embodiment explained so far. For example, it is possible that, in addition to the recordable-type recording layers, the rewritable-type recording layers are used as the recording layers of the optical disc. In the case of the rewritable-type recording layers, the use of the asymmetry and the β value does not necessarily result in the determination of the accurate power. Accordingly, it is desirable that the modulation and indicators such as $\varepsilon$, y, and $\kappa$ be co-used as the indicators for the recording-power adjustment OPC.

Also, although the case of the four-layer optical disc has been mainly given in the examples explained so far, the present invention is applicable to whatever optical discs as long as they are the three-or-more-layer multilayered optical disc.

Also, instead of being recorded onto the reproduction-specific area of the disc, such information as the recording-power variation ratio information to be recorded onto the disc may also be recorded onto the recording-capable area of the disc by disc manufacturer at the time of disc shipment. In this case, the recording of a value in agreement with the characteristics of the actually-manufactured disc becomes executable. Accordingly, there exists an advantage of becoming capable of absorbing the influence of a variation in the disc manufacturing. Also, there exists a method whereby the optical-disc drive for actually performing the recording/reproduction records the above-described differential information as a result of the disc characteristics test. In this case, there exists a merit that the combination of the disc and the drive makes it possible to absorb the variation, although there exists a demerit that the learning time within the drive will increase.

Also, in the above-described embodiment the examples, the explanation has been mainly given concerning the case where the optical transmittance after the recording decreases, i.e., the case where the optimum recording power after the recording increases. Depending on characteristics of the recording film or polarity of the recording signal, however, there may exist a case where the optical transmittance after the recording increases, i.e., a case where the optimum recording power after the recording decreases. In this case, the effects of the present invention remain the same, although the compensation coefficient becomes smaller than 1.

It should be further understood by those skilled in the art that although the foregoing description has been made on embodiments of the invention, the invention is not limited thereto and various changes and modifications may be made without departing from the scope of the appended claim.

**Claims**

1. recording method for a multi-layered optical disc (1) including N (N ≥ 3) recording layers,
   wherein sensitivity compensation information is recorded in advance into a disc control information area (DI) of said disc (1) with respect to a j-th recording layer and a k-th recording layer, said j-th recording layer excluding the recording layer positioned farthest from the light incident surface, said k-th recording layer being positioned farther from the light incident surface than said j-th recording layer, and said sensitivity compensation information being about the ratio between the recording power sensitivity of said k-th recording layer if said j-th recording layer is unrecorded and the recording power sensitivity of said k-th recording layer if said j-th recording layer is recorded, and wherein, when recording information onto a user information area (11), the information is compensated in accordance with said sensitivity compensation information,
   **characterised in that**
   said sensitivity compensation information is acquired by describing an envelope curve of recording characteristics and determining the optimum recording power, said envelope curve corresponding to all combinations of recorded or unrecorded states of a layer positioned nearer to the light incident surface than said k-th recording layer.

**Patentansprüche**

1. ufzeichnungsverfahren für eine mehrschichtige optische Platte (1), die N (N ≥ 3) Aufzeichnungsschichten umfasst, wobei im Vorhinein Empfindlichkeitsausgleichsinformationeh bezüglich einer j-ten und einer k-ten Aufzeichnungsschicht auf einem Plattensteuerinformationsbereich (DI) der Platte (1) aufgezeichnet sind, wobei die j-te Aufzeichnungsschicht die von der Lichteinfallsfläche am weitesten entfernt angeordnete Aufzeichnungsschicht nicht umfasst, wobei die k-te Aufzeichnungsschicht weiter entfernt von der Lichteinfallsfläche als die j-te Aufzeichnungsschicht angeordnet ist und die Empfindlichkeitsausgleichsinformationen das Verhältnis zwischen der Aufzeichnungsleistungsempfindlichkeit der k-ten Aufzeichnungsschicht, wenn die j-te Aufzeichnungsschicht unbeschrieben ist, und der Aufzeichnungsleistungsempfindlichkeit der k-ten Aufzeichnungsschicht, wenn die j-te Aufzeichnungsschicht beschrieben ist, betreffen, und wobei, wenn Informationen auf einen Anwenderinformationsbereich (11) aufgezeichnet werden, diese gemäß den Empfindlichkeitsausgleichsinformationen ausgeglichen werden,
   **dadurch gekennzeichnet, dass**
   die Empfindlichkeitsausgleichsinformationen durch Beschreiben einer Hüllkurve von Aufzeichnungscharakteristika und durch Festlegen der optimalen Aufzeichnungsleistung erhalten werden, wobei die Hüllkurve allen Kombinationen von beschriebenen oder unbeschriebenen Zuständen einer der Lichteinfallsfläche näher als die k-te Aufzeichnungsschicht angeordneten Schicht entspricht.

**Revendications**

1. Procédé d'enregistrement pour un disque optique multicouches (1) incluant N (N≥3) couches d'enregistrement, dans lequel des informations de compensation de sensibilité sont enregistrées à l'avance dans une zone d'informations de commande de disque **(D1)** dudit disque (1) par rapport à une $j^{\text{ème}}$ couche d'enregistrement et à une $k^{\text{ème}}$ couche d'enregistrement, ladite $j^{\text{ème}}$ couche d'enregistrement excluant la couche d'enregistrement positionnée le plus loin de la surface de lumière incidente, ladite $k^{\text{ème}}$ couche d'enregistrement étant positionnée plus loin de la surface de lumière incidente que ladite $j^{\text{ème}}$ couche d'enregistrement, et lesdites informations de compensation de sensibilité concernant le rapport entre la sensibilité de puissance enregistrement de ladite $k^{\text{ème}}$ couche d'enregistrement si ladite $j^{\text{ème}}$ couche d'enregistrement n'est pas enregistrée et la sensibilité de puissance d'enregistrement de ladite $k^{\text{ème}}$ couche d'enregistrement si ladite $j^{\text{ème}}$ couche d'enregistrement est enregistrée, et

   dans lequel, lors de l'enregistrement d'informations sur une zone d'informations d'utilisateur (11), les informations sont compensées conformément auxdites informations de compensation de sensibilité,

   **caractérisé en ce que**

   lesdites informations de compensation de sensibilité sont acquises en décrivant une courbe d'enveloppe de caractéristiques d'enregistrement et en déterminant la puissance enregistrement optimale, ladite courbe d'enveloppe correspondant à toutes les combinaisons d'états enregistrés ou non enregistrés d'une couche positionnée plus proche de la surface de lumière incidente que ladite $k^{\text{ème}}$ couche d'enregistrement.

**FIG. 1A**

**FIG. 1B**

| ITEM | CONTENTS |
|---|---|
| RECORDING POWER OF L0 (mW) | **Po(L0)** |
| RECORDING POWER OF L1 (mW) | **Po(L1)** |
| RECORDING POWER OF L2 (mW) | **Po(L2)** |
| RECORDING POWER OF L3 (mW) | **Po(L3)** |
| RESERVED | |
| RECORDED/UNRECORDED POWER RATIO FOR L1 | **Q1** |
| RECORDED/UNRECORDED POWER RATIO FOR L2 | **Q2** |
| RECORDED/UNRECORDED POWER RATIO FOR L3 | **Q3** |
| •••• | |

**FIG. 1C**

# FIG. 2

# FIG. 3

# FIG. 4

# FIG. 5A

n-TH
LAYER

**321**

# FIG. 5B

**322**

m-TH
LAYER

**432**   **431**   **432**

ABOUT 100 TRACKS

## FIG. 6

## FIG. 7A

$$\frac{A-B}{A+B} < 0$$

## FIG. 7B

$$\frac{A-B}{A+B} = 0$$

## FIG. 7C

$$\frac{A-B}{A+B} > 0$$

## FIG. 8A

$$\beta = \frac{A1-A2}{A1+A2} < 0$$

## FIG. 8B

$$\beta = \frac{A1-A2}{A1+A2} = 0$$

## FIG. 8C

$$\beta = \frac{A1-A2}{A1+A2} > 0$$

## FIG. 9

## FIG. 10

## FIG. 11

## FIG. 12

## FIG. 13

## FIG. 14

# FIG. 15A

| 3TH LAYER | LEAD-IN | OPC AREA | BUFFER ETC. | USER AREA |
| 2TH LAYER | LEAD-IN | OPC AREA | BUFFER ETC. | USER AREA |
| 1TH LAYER | LEAD-IN | OPC AREA | BUFFER ETC. | USER AREA |
| 0TH LAYER | LEAD-IN | OPC AREA | BUFFER ETC. | USER AREA |

14    12    13    11

# FIG. 15B

UNRECORDED

123    123    123    123    123

n-TH LAYER

RECORDED    > L    UNRECORDED

123    123    123    123    123

m-TH LAYER

RECORDED    UNSUITABLE FOR TESTING    UNRECORDED

# FIG. 15C

UNRECORDED BLOCK    RECORDED BLOCK

n-TH LAYER

124    L    124

m-TH LAYER

UNRECORDED BLOCK    UNSUITABLE FOR TESTING    RECORDED BLOCK

# FIG. 16

RECORD ON j-TH LAYER

POWER LEARNING IN
OPC AREA ON j-TH LAYER
➡ Po

$j+1 \Rightarrow i$

$i > N$ — Yes

No

CHECK RECORDING STATUS OF
CORRESPONDING REGION ON i-TH LAYER

RECORDING STATUS
OF i-TH LAYER

UNRECORDED — RECORDED

UNKNOWN OR MIXED

COEFFICIENT FOR
"UNRECORDED"
$\Rightarrow Q'i$

COEFFICIENT FOR
"UNKNOWN OR MIXED"
$\Rightarrow Q'i$

COEFFICIENT FOR
"RECORDED"
$\Rightarrow Q'i$

$i+1 \Rightarrow i$

COEFFICIENT : $Q_{total} \Leftarrow \prod_{i=j+1}^{N} Q'i$

COMPENSATED
RECORDING POWER : $Po' \Leftarrow Po \times Q_{total}$

RECORD

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5101398 A
- JP 2008192258 A
- EP 1788561 A
- JP 2003109217 A
- JP 2005038584 A
- JP 2004327038 A